# EUROPEAN PATENT APPLICATION

(11) **EP 4 508 987 A1**
(43) Date of publication of application: **19.02.2025**
(21) Application number: 24194857.9
(22) Date of filing: 16.08.2024
(51) Int. Cl.: A23L 13/40, A22C 17/00, A23L 13/60

(54) **METHOD FOR PREPARING A MEAT PASTE**

(30) Priority: 17.08.2023 BE 202305683
(71) Applicant: Beltaste Hamont NV, 3930 Hamont (BE)
(72) Inventor: MUYSHONDT, Leon, 3930 Hamont (BE)
(74) Representative: Brantsandpatents bv

(57) **Abstract**

The present invention relates to a method for the industrial preparation of a meat paste, comprising: a) placing meat at a temperature between -30°C and 4°C in a meat grinder with a worm screw, b) pushing said meat through a cutting plate with openings by movement of the worm screw, wherein the temperature is raised to and maintained at a temperature between 0°C and 6°C, c) placing the meat obtained in step b) into a cutting device, and d) cutting the meat in the cutting device into a meat paste by means of a shaft with blades provided for that purpose in the cutting device, wherein during the cutting process the temperature of the meat paste rises to a maximum of 16°C, wherein the speed of the shaft is between 1400 and 4000 revolutions per minute, and the temperature of the meat paste is continuously monitored and adjusted during the cutting process, in order to determine the total duration of the cutting process.

## Description

### TECHNICAL FIELD

The invention relates to a method for preparing a meat paste.

### PRIOR ART

Meat products such as hamburgers and frikandels are very popular. Typically, these are formed from a homogeneous meat paste. For the preparation of the meat paste, the ingredients thereof are combined in a grinding device or cutting device and then finely ground or cut, by means of the same grinding device or cutting device. The main ingredient is always frozen meat or chilled meat, or a mixture of both. Methods for producing a meat paste are known, for example, from BE102505, although such a method still has some drawbacks, including a reduced protein structure of the meat in the meat paste, linked to breaking of the resulting meat products, and a suboptimal 'bite', as indicated below.

Typically, it is particularly difficult to prepare the meat paste in a reproducible manner, wherein the structure and particle size are controllable. Usually, the preparation process is carried out in an environment with a stable temperature, humidity, and the like.

It should also be ensured that the proteins, which are inherently present in the meat and provide a binding of the meat particles, are activated. Additionally, the proteins are preferably as functional as possible. Both a too low binding degree and a too high binding degree will indeed have a negative influence on the final product that is formed from the resulting meat paste. Thus, the "bite" of solid products produced based on this meat paste must be sufficiently firm, and the disintegration or breaking of these products must be avoided to prevent waste.

Moreover, blades of the cutting device in which the meat is sliced break frequently, partly under the influence of vibrations, which negatively affects the safety of both the consumer and the technician who has to replace them.

There is consequently a need for a controlled, industrial process for producing a meat paste suitable for further products such as hamburgers, sausages, and meatballs, in an efficient and safe manner.

The present invention aims to find a solution to at least some of the above-mentioned problems.

### SUMMARY OF THE INVENTION

The invention relates to a method for the industrial preparation of a meat paste as a basic ingredient for meat products according to claim 1. More specifically, this method includes the following steps:
a) placing a frozen or chilled meat in a meat grinder with a worm screw at a temperature between -30°C and 4°C,
b) pushing said meat through a cutting plate with openings by movement of the worm screw, wherein the temperature is raised to and maintained at a temperature between 0°C and 6°C,
c) placing the meat obtained in step b) into a cutting device, and
d) cutting up the meat in the cutting device to a meat paste by means of a shaft with blades provided for this purpose in the cutting device, after and/or during the addition of one or more additives and/or flavorings selected from the group consisting of salt, breadcrumbs, starch and water, wherein during the cutting process the temperature of the meat paste rises to a maximum of 16°C,
wherein the speed of the shaft is between 1400 and 4000 revolutions per minute, and the temperature of the meat paste is continuously monitored and adjusted during the cutting process, in order to determine the total duration of the cutting process.

Preferred embodiments of this method are described in claims 2 to 14.

In a second aspect, the invention relates to a meat paste prepared according to the present method as claimed in claim 15.

This method offers several advantages. The combination of step a) and b) forms a pre-processing resulting in a meat paste with increased functional proteins and a firm texture and bite. By precisely increasing and maintaining the temperature between 0 and 6°C, by pushing the meat through the openings in the cutting plate and gradually increasing the temperature of the meat paste to a maximum of 16°C in the cutting device, optimum firmness is achieved, which is essential for further processing into meat products. In addition, this process shortens the cutting process, which results in energy savings and an energetic advantage. In addition, by increasing the speed of the shaft with blades to between 1400 and 4000 revolutions per minute, the generation of vibrations by the cutting device is also significantly reduced. This reduces the risk of knife breakage and significantly increases safety.

### DETAILED DESCRIPTION

The invention relates to a method for preparing a meat paste.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In a first aspect, the invention relates to a method for industrially preparing a meat paste as a basic ingredient for meat products, the method comprising:
a) placing a frozen or chilled meat in a meat grinder with a worm screw at a temperature between -30°C and 4°C,
b) pushing said meat through a cutting plate with openings by movement of the worm screw, wherein the temperature is raised to and maintained at a temperature between 0°C and 6°C,
c) placing the meat obtained in step b) into a cutting device, and
d) cutting up the meat in the cutting device to a meat paste by means of a shaft with blades provided for this purpose in the cutting device, after and/or during the addition of one or more additives and/or flavorings selected from the group consisting of salt, breadcrumbs, starch and water, wherein during the cutting process the temperature of the meat paste rises to a maximum of 16°C,
wherein the speed of the shaft is between 1400 and 4000 revolutions per minute, and the temperature of the meat paste is continuously monitored and adjusted during the cutting process, in order to determine the total duration of the cutting process.

Here, steps a) and b) represent a pre-processing step of the frozen or chilled meat before it is introduced into the cutting device. This pre-processing means, among other things, that the meat is already broken down into smaller parts before it is cut, which shortens the cutting process in the cutting device. This has the advantage, inter alia, that the protein structure of the meat is better preserved, ensuring that the functionality of these proteins is also better preserved. As a consequence, meat products based on this meat paste have a better and firmer texture and will be less likely to break or fall apart quickly. As a result, meat products based on this meat paste will be rejected for sale less often, and less waste will be produced.

This method also results in a meat paste with a better and firmer "bite" as well as an improved mouthfeel. In the context of nutrition, the term "bite" refers to the texture and consistency of food when it is chewed. It is the level of resistance or firmness felt when biting into a piece of food. A good "bite" is often associated with a pleasant texture and mouthfeel. It can range from food that is soft and easy to chew to food that offers more resistance and has a firmer texture. In general, the "bite" of food contributes to the overall eating experience and can influence taste perception. Improving the "bite" and mouthfeel is therefore extremely important when producing a meat paste for a meat product suitable for consumption.

By shortening the cutting process, energy is saved, which also provides an energetic advantage. Preferably, the cutting process is shortened by at least 5%, preferably at least 7%, more preferably at least 10%, more preferably at least 11%, more preferably at least 12%, more preferably at least 13%, more preferably at least 14%, most preferably at least 15%, saving energy. More specifically, the cutting process is on average shortened by 2 minutes out of a total of approximately 14 minutes, resulting in an average energy savings of about 15%.

According to the current method, the temperature is increased and maintained between 0 and 6 °C by pushing the meat through the openings of the cutting plate, and the temperature of the meat paste rises to a maximum of 16°C in the cutting device, preferably up to 14°C, or 12°C, or 10°C, or 8°C, or 6°C, or 4°C. These temperatures are optimal to obtain a firm meat paste which is necessary for further processing in meat products. If the temperature is lower, the proteins are not or are not sufficiently functional. If the temperature is too high, certain proteins may denature and/or lose their functionality.

By continuously monitoring and adjusting the temperature of the meat paste during the cutting process, the particle size and degree of emulsion can be better controlled. The meat paste can therein be seen as an emulsion of mainly fat in water, wherein the proteins present in the meat bind and stabilize this emulsion. The extent to which the bonding takes place, i.e., the degree of activation of these proteins, depends strongly on the size of the particles in the meat paste. This particle size is partly determined by the temperature and the temperature profile during the cutting process. This also regulates the degree of activation of the proteins.

By cutting the meat paste using a cutting device equipped with a shaft with blades after the meat has been reduced by forcing it through the openings of the cutting plate, rather than being solely and completely cut up using a meat grinder equipped with a worm screw, the meat paste can be cut finer, in part because the fats emulsify better and the proteins can be more effectively activated.

By cutting up the meat, the cutting device generates vibrations. By increasing the speed of the shaft with blades to between 1400 and 4000 revolutions per minute, fewer vibrations are generated, reducing the risk of knife breakage and increasing safety. In addition, it is important to understand that such vibrations also cause damage to the building in which the cutting device is installed, as well as to other devices in the building. Increasing the speed and reducing the vibrations consequently results in not only a reduced risk of knife breakage but also less damage to surrounding equipment and the building.

According to an embodiment, the meat is cut in a continuous cutting device equipped with a shaft with blades, wherein the speed of the shaft is between 1500 and 3000 revolutions per minute. At this speed, a meat paste is obtained with an optimized particle size, and vibrations are sufficiently limited to prevent damage as much as possible.

The current method results in a meat paste with a particle size ranging from 1.5 to 8 mm, preferably between 2 and 6 mm, or between 2 and 4 mm. An advantage of this is that the particles in the resulting meat paste, in particular the meat particles, are not too coarse but rather fine. For example, after this cutting process, the meat paste comprises meat particles with an average size of about 3 mm or 5 mm. This provides a good structure to the meat paste and the meat products produced with it. Furthermore, this particle size leads to an optimal binding of the meat paste in combination with the greater amount of functional proteins that are retained during the shortened cutting process.

The improved method for the industrial preparation of the meat paste of the present invention, comprising the pre-processing steps a) and b), as well as the optimized rotation speed of the shaft of the cutting device, results in a shortened production time of such meat paste. Preferably, the production time is shortened by at least 5%, preferably at least 6%, more preferably at least 7%, more preferably at least 8%, more preferably at least 9%, more preferably at least 10%, more preferably at least 11%, more preferably at least 12%, more preferably at least 13%, more preferably at least 14%, or indeed 15%. As previously mentioned, the cutting process is typically reduced by 2 minutes out of a total of about 14 minutes, resulting in an average energy saving of approximately 15%.

According to an embodiment, the meat parts are reduced in size by passing through the openings of the cutting plate from an average particle size of between 50 and 60 mm, for example 40 mm, or between 10 and 25 mm, such as between 12 and 20 mm.

According to a non-limiting embodiment, only the meat is first introduced into the cutting device. The meat is then partially or completely cut, by means of the cutting device. Only then are the other ingredients, i.e., one or more additives and/or flavorings, added, after which the whole is further cut up into a meat paste.

According to an embodiment, the introduced meat initially has a temperature of at least 0°C and the temperature of the meat paste rises to a maximum of 16°C. Preferably, the meat has a temperature of around 4°C upon insertion, and the temperature of the meat paste increases while being pushed through the openings of the cutting plate. For example, the meat is chilled meat or defrosted meat, and the meat paste is heated during the pushing through the openings in the cutting plate by the increased pressure to a temperature between 0°C and 6°C.

According to an embodiment, the blades of the cutting device are arranged in pairs opposite each other around the shaft. This improves the stability of the cutting device and reduces the generation of vibrations. Preferably, the cutting device comprises 4, 6, or 8 blades.

According to an embodiment, the blades have a flank surface area between 500 and 550 cm², preferably approximately 520 cm². This low flank surface results in low pressure from the flank of the blade on the meat, which means the blades are less likely to break and need replacing, and therefore have a longer lifespan. This further leads to increased safety for both the consumer and the technician replacing blades, as well as to lower operating costs. This low flank surface area also results in reduced friction with the meat during cutting, causing the temperature of the meat to rise less and enabling a higher rotation speed of the shaft.

According to another or further embodiment, the blades are made from hardened and tempered steel *[in Dutch: gehard veredeld staal].* This also means that the blades break less quickly and need to be replaced less often.

According to a preferred embodiment, the blades of the cutting device are placed in pairs opposite each other around the shaft, the blades have a flank surface area of between 500 and 550 cm², preferably approximately 520 cm², and are produced from a hardened and tempered steel, preferably an optimized hardened and tempered steel. An example of such blades are the Seydelmann S24 type V blades. The use of such blades results in low operational cost, fewer vibrations, and increased safety. Preferably, the likelihood of blade breakage is up to 60%, preferably up to 65%, more preferably up to 70%, even more preferably up to 75%, even more preferably up to 80% less than when using Seydelmann K and/or BW blades.

According to an embodiment, the blades have a cutting speed between 140 and 180 m/s, preferably between 150 and 170 m/s, and more preferably between 160 and 170 m/s.

In an embodiment, the introduced meat initially has a temperature of up to -15°C and the temperature of the meat paste rises to a maximum of 16°C. For example, the meat is frozen meat, and the meat paste is heated during the pushing through the cutting plate and then during the cutting process. An advantage of this is that the particles in the resulting meat paste, in particular the meat particles, will now be finer. On the one hand, the meat paste is thus more homogeneous. On the other hand, this makes the meat paste more cohesive, due to improved emulsion of fats and improved activation of the proteins.

Preferably, the meat is supplied in frozen form. Depending on the desired temperature of the ingredients for the cutting process, the frozen meat is either directly fed into the meat grinder with worm screw or first partially or completely thawed. An advantage of the transport and temporary storage of meat in frozen form is that this is better for the shelf life, both of the meat and of the final meat product.

According to a non-limiting embodiment, dried onions and/or sugar are also added to the ingredients. Preferably, dextrose is used as sugar.

According to a preferred embodiment of the method, the meat comprises chicken and/or pork. Preferably, the meat comprises both chicken and pork, and more preferably the pork is pork bacon. According to a non-limiting embodiment, meat from cattle and/or horses is also added as an ingredient prior to cutting. An advantage of using chicken is that it is cheaper and it gives structure to the meat paste. It also increases the volume of meat paste. An advantage of using pork is that it contributes to the flavor of the meat paste and the resulting meat product.

According to a preferred embodiment of the method, salt is added in the form of a salt solution in water. With further preference, it relates to brine, being a quasi-saturated solution of salt in water. An advantage of this is that the added amount of salt in this case is easier to dose. According to an alternative embodiment, the salt is added in the form of granulated salt.

According to a preferred embodiment of the method, the added mass percentage of salt is at least 0.5% and at most 2.5%. An advantage of adding salt, according to the specified concentration, is that it enhances the flavor without being perceived as a nuisance. Salt also helps stabilize the proteins in the meat paste.

According to a preferred embodiment of the method, the added mass percentage of breadcrumbs and/or starch is at least 5% and at most 15%. An advantage of adding starch, according to the specified concentration, is that starch contributes to the binding of the meat paste.

According to a preferred embodiment of the method, herbs and spices are added, selected from the group of black pepper, cumin, coriander, cloves, nutmeg and cayenne pepper. When selecting these herbs and spices, allergies are preferably taken into account. An advantage of these herbs and spices is that they give the resulting meat product a distinct and tasty flavor.

According to a preferred embodiment of the method, the herbs and spices are added in the form of powders and/or mixtures of powders. Preferably the herbs and spices are added in the form of a single powder mixture. An advantage of using (fine) powders is that the flavor of the herbs and spices is optimally transferred to the meat paste, and that the resulting meat product is homogeneous in flavor and structure.

Preferably, between 1 and 2.5% salt, between 5 and 15% breadcrumbs and starch, and up to 2% herbs and spices are added.

According to a preferred embodiment of the method, the meat paste is prepared in quantities with an individual mass of between 400 kg and 800 kg. More preferably, this individual mass is approximately 600 kg. An advantage of this is that such a quantity of meat paste is compatible with the capacity of standard industrial installations.

According to a preferred embodiment of the method, the meat paste is divided into portions by means of an extrusion process or other shaping process. According to a non-limiting embodiment, a rod is formed from meat paste by means of extrusion. This forming process is interrupted at regular time intervals, where the rod is cut through. This is preferably done by means of a servo-controlled diaphragm, which is opened and closed alternately. In this way sausages are formed from meat paste, where these sausages are essentially the same length.

According to a preferred embodiment of the method, the mass of an individual portion is between 8 g and 500 g. Preferably, the mass of each portion is approximately equal to 100 g. According to a non-limiting embodiment, each portion is a sausage with a mass of approximately 100 g. An advantage of this is that each portion thereby approximately corresponds to the standard amount of the meat product eaten by a single person and during one meal.

Preferably, the meat paste is thus divided into portions and the portions are then formed into meat products. For further processing, these meat products are preferably frozen. An advantage of this is that the meat products can then be stored for much longer during storage and transport.

Preferably, the meat product undergoes a heating process prior to freezing. For example, the meat product is placed in a bath with warm water, the meat product is placed in a steam bath, the meat product is passed through a steam tunnel, or the meat product is placed in heated oil. An advantage of this is that the meat product thus becomes firmer in shape, among other things as a result of denaturation of the proteins. Another advantage of this is that most of the micro-organisms die off as a result of the increased temperature. This contributes to the shelf life of the meat products.

According to a non-limiting embodiment, the meat products are immersed in a batter. This immersion can take place both prior to the heating process and following the heating process.

In a second aspect, the invention relates to a meat paste obtained according to the method as described above in each of the embodiments. Advantages of the meat paste described in combination with the first aspect are also applicable to this second aspect.

In an embodiment, the meat paste is an emulsion of proteins, fat, and water.

In what follows, the invention is described by way of non-limiting examples illustrating the invention, and which are not intended to and should not be interpreted as limiting the scope of the invention.

### EXAMPLES

### Example 1: method for the production of a meat paste as a basic ingredient for meat products.

A meat paste is prepared by placing frozen or chilled meat into a meat grinder which includes a worm screw and a cutting plate with openings. This meat has an initial temperature located between -30°C and 4°C. By activating the worm screw, the meat is pressed through the openings of the cutting plate, whereby the meat is cut. Due to the pressure exerted by the worm screw on the meat and the cutting plate, the temperature is increased to between 0°C and 6°C and then kept constant at these temperatures.

This cut meat at a temperature of between 0°C and 6°C is then placed in a cutting device and cut into a meat paste. To this end, the cutting device includes a shaft with eight Seydelmann S24 type V blades in hardened and tempered steel, wherein the blades are positioned in pairs opposite each other with respect to this shaft. The shaft with bladed is activated and the meat is cut up by the blades at 1500 to 3000 revolutions per minute. Through this cutting, the temperature of the meat paste rises to a maximum of 16°C. This temperature is constantly monitored and adjusted, and determines the total duration of the cutting process, which is on average 2 minutes shorter than if the meat were not pre-cut in the meat grinder.

To obtain the optimal number of revolutions per minute in the cutting device, and finally to obtain an optimal meat paste without the meat heating up too quickly, blades are used with a flank surface of a maximum of 550 cm². Such blades used at such high speed also reduce the vibrations generated by the cutting device, making the blades less likely to break and also reducing/avoiding damage to the building in which the cutting device is installed.

During the cutting process, salt, breadcrumbs, starch, water and/or herbs are added as desired. For example, between 1 and 2.5% salt, between 5 and 15% breadcrumbs and starch, and up to 2% herbs and spices are added.

### Example 2: characteristics of the resulting meat paste as a basic ingredient for meat products.

The meat paste obtained in Example 1 is divided into individual portions by means of an extrusion process, thereby obtaining a specific elongated shape, and a weight between 8 g and 500 g, such as for example approximately 100 g.

The resulting meat product is then subjected to a test in which breakage/the disintegration of the product is analyzed, as well as to an objective taste test by a test panel. Finally, the baking properties are also determined and compared.

The results are shown below, and are a comparison with a similar method where Seydelmann K blades are used to cut the meat, with the speed kept lower (max 1300-1700 rpm), and where the method does not include the step of first grinding the meat in a meat grinder with a worm screw. Additionally, a further difference is that the temperature of the meat paste during the cutting process is not continuously monitored and adjusted in order to determine the total duration of the cutting process.

Improved texture and bite of meat paste: The meat paste prepared according to the improved method has a more homogeneous and firm texture, resulting in a more pleasant "bite." The structure of the meat paste is better preserved by shortening the cutting process and retaining functional proteins. This leads to a product with higher quality and more consistency.

Reduced breakage of meat products: Meat products such as hamburgers, sausages, and meatballs produced using the improved meat paste break less quickly and/or fall apart less quickly. This is due to the better binding of the meat paste and the finer particle size of the meat. This reduces product waste and enables more high-quality products to be produced.

Energy savings: By shortening the cutting process, up to 15% energy is saved during the cutting process, resulting in lower energy costs and a positive impact on the environment.

Improved baking properties: Products prepared with the improved meat paste also have better baking properties. They retain their shape during baking and exhibit less shrinkage or deformation. This leads to more attractive and better-looking end products, and again less waste.

## Claims

1. A method for the industrial preparation of a meat paste as a basic ingredient for meat products, the method comprising:
a) placing a frozen or chilled meat in a meat grinder with a worm screw at a temperature between -30°C and 4°C,
b) pushing said meat through a cutting plate with openings by movement of the worm screw, wherein the temperature is raised to and maintained at a temperature between 0°C and 6°C,
c) placing the meat obtained in step b) into a cutting device, and
d) cutting up the meat in the cutting device to a meat paste by means of a shaft with blades provided for this purpose in the cutting device, after and/or during the addition of one or more additives and/or flavorings selected from the group consisting of salt, breadcrumbs, starch and water, wherein during the cutting process the temperature of the meat paste rises to a maximum of 16°C,
wherein the speed of the shaft is between 1400 and 4000 revolutions per minute, and the temperature of the meat paste is continuously monitored and adjusted during the cutting process, in order to determine the total duration of the cutting process.

2. The method according to claim 1, wherein the meat is cut into a meat paste in a continuous cutting device provided with a shaft with blades, wherein the speed of the shaft is between 1500 and 3000 revolutions per minute.

3. The method according to any of the preceding claims, wherein the blades are placed in pairs opposite each other around the shaft.

4. The method according to any of the preceding claims, wherein the blades have a flank surface area between 500 cm² and 550 cm².

5. The method according to any of the preceding claims, wherein the blades are produced from a hardened and tempered steel.

6. The method according to claim 1 or 2, wherein the blades have a cutting speed of between 140 and 180 m/s.

7. The method according to any of the preceding claims, wherein the temperature of the meat paste rises to between 0 and 16°C during the cutting process.

8. The method according to any of the preceding claims, wherein the meat comprises chicken and/or pork.

9. The method according to any of the preceding claims, wherein the salt is added in the form of a saline solution in water.

10. The method according to any of the preceding claims, wherein the added mass percentage of salt is at least 0.5% and at most 2.5%.

11. The method according to any of the preceding claims, wherein the added mass percentage of breadcrumbs and/or starch is at least 5% and at most 15%.

12. The method according to any of the preceding claims, wherein herbs and spices are added, chosen from the group of black pepper, cumin, coriander, cloves, nutmeg and cayenne pepper.

13. The method according to any of the preceding claims, wherein the herbs and spices are added in the form of powders and/or mixtures of powders.

14. The method according to any of the preceding claims, wherein the meat paste is divided into portions by means of an extrusion process or another shaping process.

15. A meat paste prepared according to the method according to any of the preceding claims, wherein the meat paste is an emulsion of proteins, fat, and water.
